# EUROPEAN PATENT SPECIFICATION

(11) **EP 1 625 578 B1**
(45) Date of publication and mention of the grant of the patent: **09.05.2007**
(21) Application number: 04730349.0
(22) Date of filing: 29.04.2004
(51) Int. Cl.: G11B 7/24

(54) **OPTICAL STORAGE MEDIUM**
OPTISCHES SPEICHERMEDIUM
SUPPORT DE STOCKAGE OPTIQUE

(30) Priority: 08.05.2003 EP 03101277
(43) Date of publication of application: 15.02.2006
(73) Proprietor: Koninklijke Philips Electronics N.V., 5621 BA Eindhoven (NL)
(72) Inventor: MIJIRITSKII, Andrei, NL-5656 AA Eindhoven (NL)
(74) Representative: van der Veer, Johannis Leendert
(86) International application number: PCT/IB2004/050551
(87) International publication number: WO 2004/100141

(56) References cited:
- EP-A- 1 178 479
- US-A- 5 627 817
- US-A1- 2003 048 744

## Description

The present invention relates to an optical storage medium.

Optical recording media are commonly used as memory devices in computers and consumer electronic products. Since the introduction of the Compact Disc (CD) further optical recording media such as the digital video disc (DVD) and the Blu-ray Disc (BD) have been developed in order to enhance the storage capacity of the media. The increase in data capacity is usually done by scaling down the size of the information bits (represented by pits or marks) in the disc. This is achieved by increasing the numerical aperture (NA) of the objective lens and decreasing the wavelength of the read/write laser beam. A laser beam focused in a small spot scans the data layer of the media in order to read out the information stored in the optical recording medium. CDs are scanned by a laser, which has a wavelength of 780nm and focused by a lens with a numerical aperture (NA) of 0.45. DVDs require a laser with a wavelength of 650-670mn and a lense with NA=0.65 and BD is scanned with a laser having a wavelength of 405nm and focused by a lense with NA=0.85.

The success of a new optical storage system largely depends on compatibility with the older systems. Consumers expect to be able to use recording media with older format such as the CD in newer storage devices such as the DVD player. One of the major issues there is the compatibility of the media with the requirements of the drives. Usually it is impossible to read-out the newer (higher capacity) format media (such as e.g. DVD media) with the older (e.g. CD) drives since the CD laser spot is much bigger than that of DVD and it covers several data tracks and many data pits/marks at the same time. By contrast, it is possible (at lease theoretically) to trace single data tracks of the older type media on the newer type drives. However, it is often the case that optical characteristics (such as reflection level and signal modulation) of the older media at the laser wavelength of the newer system do not correspond to the requirements of the newer system. For this reason DVD-drives capable of reading CDs use two different wavelengths for reading. The first wavelength is the CD wavelength of 780mn and the second wavelength is the DVD wavelength of 670nm. These DVD-drives need two different laser diodes for generating the different wavelengths and means for discerning DVDs from CDs. As a result, the DVD-drives are more expensive and complex. The same principal is expected to be implemented in BD drives capable of reading DVDs.

Document US-A-5 627 817 (cf. the preamble of claim 1) discloses an optical disk data storage system with multiple write-once dye-based layers. A light transmissive substrate is provided onto which laser light is incident at a single wavelength. The disk supports at least two spatially separated data layers formed of dye material. Through the use of the characteristic anomalous dispersion absorption band of certain dye materials, the first data layer ans intermediate data layers are allowed to exhibit both sufficient absorption when the laser is focused on those data layers and high transmissivity when the laser is focused on the last or farther data layers.

Furthermore, document EP-A-1 178 479 discloses a multi-layer information medium which womprises a substrate or a pair of substrates, and at least two information-storing layers for storing recorded information and/or tracking servo information disposed on the substrate or between the pair of substrates, wherein at least one information-soring layer is recorded or read by a recording beam or a reading beam which has passed through other information-storing layer(s). In this medium, the medium has at least one cured intermediate layer comprising an active energy radiation-curable resin, and at least one of the cured intermediate layer(s) has a tensile elongation at break of 15 to 200% and a tensile modulus of 20 to 1,000 MPa. Thereby, the multi-layer information medium is less likely to be deflected and twisted.

The object of the invention is to overcome the previously mentioned drawback.

The problem is solved by an optical storage medium according to independent claim 1. The optical storage medium has a storage layer and a first layer, which preferably covers the storage layer. The first layer provides optical properties sufficient for data retrieval from the storage layer using a laser with a first wavelength W₁. Hence data may be read from the storage laser by using a laser with the first wavelength W₁. The laser beam is transmitted through the first layer onto the storage layer and reflected thereof. Information is usually recorded onto the optical storage medium using the laser with the first wavelength W₁. In accordance with the present invention disclosure, the optical storage medium further comprises a second layer, which preferably covers the first layer. The second layer provides optical properties sufficient for data retrieval from the storage layer using the laser with the second wavelength W₂ without deteriorating the optical properties of the medium at the first wavelength W₁. Consequently data may be retrieved from the storage medium using two different wavelengths W₁ and W₂. The storage medium is compatible with different optical storage systems as far as the optical properties are concerned.

The refraction index N_{L1} (W₁) of the first layer for the first wavelength and the refraction index N_{L2} (W₁) of the second layer of the first wavelength are chosen in such a way that the relative difference between the refraction indexes (N_{L1} (W₁)-N_{L2} (W₁))/N_{L1} (W₁) does not exceed 0.1. The purpose of this measure is to avoid, that a laser beam with the first wavelength is refracted by the second layer in such a way, that data may not be read out of the storage layer.

The first layer may provide optical properties sufficient for data retrieval from the storage layer using a laser beam with a first wavelength W₁ of 670nm (DVD) and the second layer provides optical properties sufficient for data retrieval from the storage layers there using a laser beam with the second wavelength W₂ of 405nm (BD). This optical storage medium may be used in both DVD-drives and BD-drives. It has been found that the best optical properties are achieved, if the second layer is made of 2-Ethylen-2-cyano-4-(3-methyl-2-oxazolinylidene)-crotonate (C₁₇H₂₆N₂O₃). This thickness of the second layer lies preferably within the range of 60-70 nm.

The preferred embodiment of the present invention is described herein with reference to the accompanied drawings
Fig. 1 shows a cross-section of a conventional DVD storage medium.
Fig. 2. shows a graph representing the optical contrast and the reflection level of the conventional DVD of Fig. 1 as a function of the thickness of the first layer L1 for a laser beam with a wavelength of 670nm.
Fig. 3 shows a graph representing the optical contrast and reflection level of the conventional DVD optical recording medium of Fig. 1 as a function of the thickness of the first layer L1, when a laser beam having a wavelength of 405mn is used.
Fig. 4 shows a graph representing the refraction index and absorption coefficient of the material C₁₇H₂₆N₂O₃ employed in the preferred embodiment as a second layer L2 as a function of the wavelength of a laser beam.
Fig. 5 shows a graph representing the optical contrast and reflection level of the recording medium according to the preferred embodiment as a function of the thickness of the correction layer L2, if a laser beam with a wavelength of 670nm is employed.
Fig. 6 shows a graph representing the optical contrast and the reflection index of the optical recording medium according to the preferred embodiment for a monochromatic laser beam with a wavelength of 405mn as function of the thickness of the second layer (correction layer) L2.

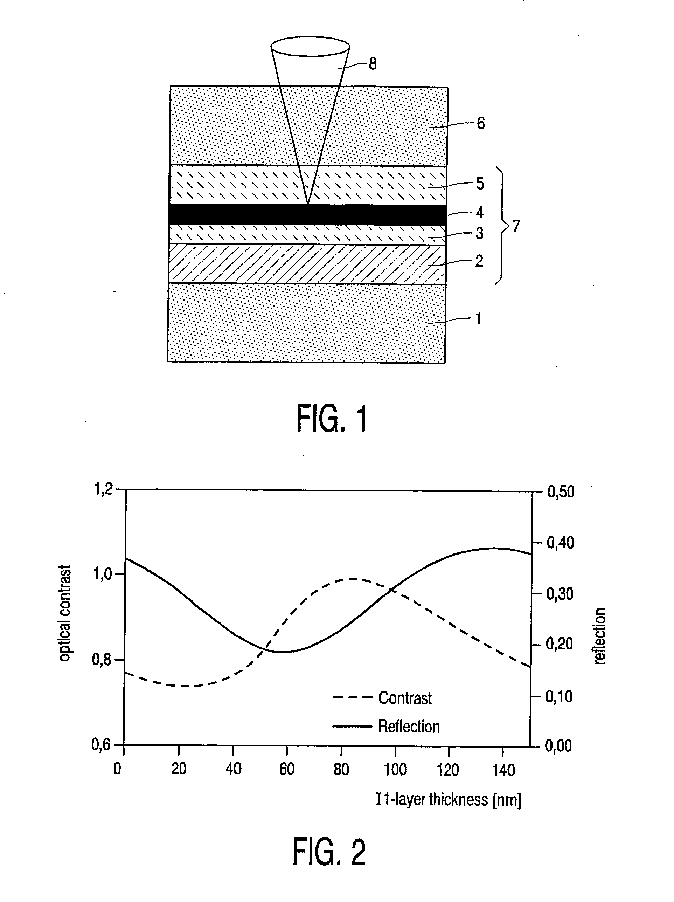

The DVD medium shown in Fig. 1 comprises a dummy substrate 1 which is made out of polycarbonate. The dummy substrate has a thickness of roughly 0.6mm. A reflector layer 2 is provided on top of the dummy substrate 1. The reflector layer consists of a silver alloy. The thickness of the reflector layer equals roughly 120nm. A dielectric layer 3 with a thickness of 25nm is provided on top of the reflector layer and is made out of ZnS:SiO₂. The dielectric layer is transparent for laser beams with a wavelength of 670nm and 405nm. The recording layer 4 is provided on top of the dielectric layer 3. The recording layer has a thickness of 15nm and is made out of a doped Sb-Te alloy. The material of the recording layer is either amorphous or crystalline. The amorphous and crystalline regions of the recording layer represent the information bits encoded in the layer. The different optical properties of amorphous and crystalline recording layer may be detected by the reflection of the laser beam 8 which is scanned across this layer 4. The optical contrast is defined as the difference between the radiation reflected from the amorphous and crystalline regions of the recording layer divided by the radiation reflected from the crystalline region of the recording layer. The reflection level is the ratio between the radiation reflected from the crystalline recording layer and the radiation input. The laser radiation 8 passes through a first layer 5 and a substrate 6 provided consecutively on top of the recording layer 4. The layers 2, 3, 4 and 5 form the recording stack 7 of the recording medium. The first layer L1 is also made out of ZnS:SiO₂ and has a thickness of approximately 85mn.

Fig. 2 shows how the optical contrast and reflection level of the known DVD recording medimn changes, if the thickness of the first layer 5 is increased or reduced. The maximum optical contrast of the recording medium is reached at a layer thickness of 85mn. At this point, the optical contrast is equal to 0.999 (or 99.9 percent) and the reflection level is equal to 0.256 (or 25.6 percent), respectively. The reflection level reaches a minimum at around 60 nm layer thickness. The optical contrast and reflection of the DVD medium is determined in Fig. 1 for a laser beam with the wavelength of 670nm.

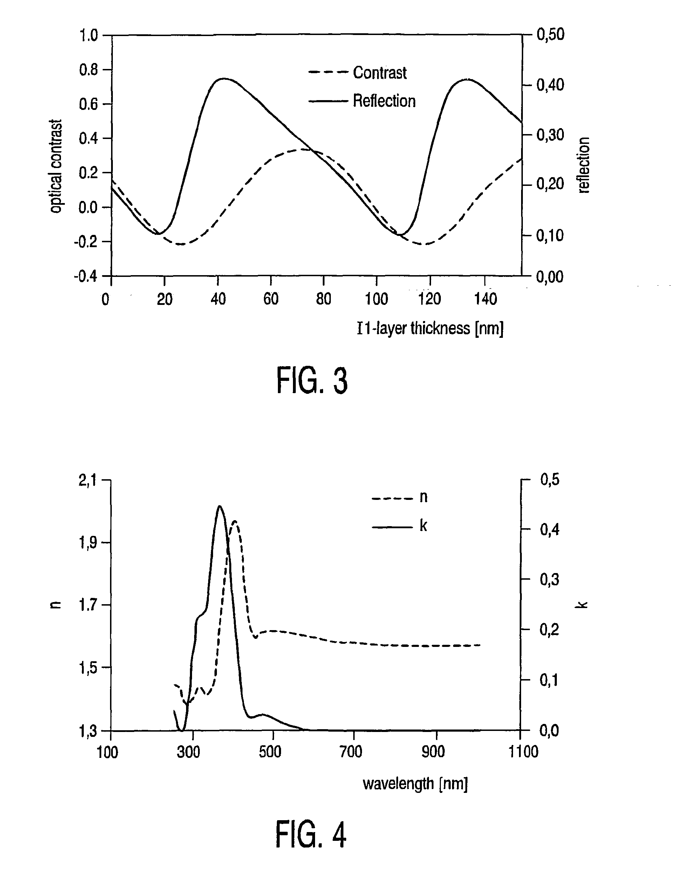

In Fig. 3 the optical contrast and reflection of the known DVD recording medium is shown once again. This time a laser beam with a wavelength of 405nm was used to detect the optical contrast and reflection level. The optical contrast has a maximum at approximately 75 nm layer thickness and minima at 25 nm and at 115 nm layer thickness. The reflexion level has two maxima at 40 nm and 130 nm layer thickness. The optical contrast is equal to 0.223 (or 22.3 percent) for a layer thickness of 85nm. The reflection level is equal to 0.242 (or 24.2 percent) at the same layer thickness. The optical contrast is not sufficient for reading out the data recorded on the recording layer.

The preferred embodiment of the present invention comprises all the layers of the known recording medium shown in Fig. 1. Additionally, a second layer L2 is introduced between the first layer 5 and the substrate 6. The second layer L2 is made out of C₁₇H₂₆N₂O₃. The index of refraction and the absorption coefficient of this material for different wavelengths is shown in Fig.4. The absorption coefficient k for the material has a maximum at a wavelength of around 380 nm. The index of refraction n for the material has a maximum at a wavelength of approximately 420 nm. The material has an index of refraction n of about 1.589 for a wavelength of 670mn. The absorption coefficient k is equal to 0.000 for the wavelength of 670nm.

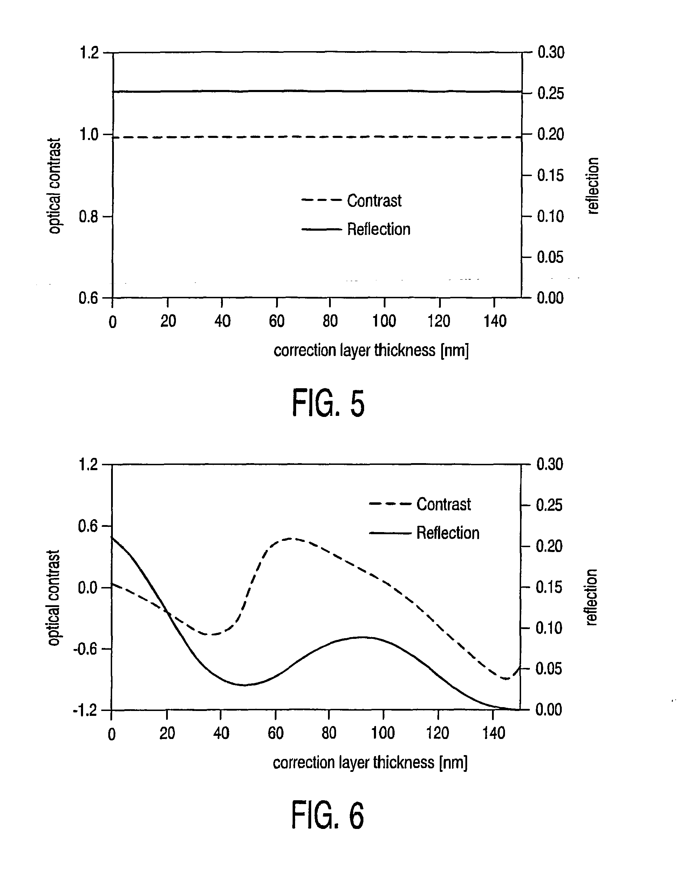

The insertion of the second layer L2 improves the optical contrast of the recording medium for a wavelength of 405nm considerably without negatively affecting the optical contrast for the wavelength of 670nm. This is depicted in Figs. 5 and 6.

Fig. 5 shows the influence of the second layer (correction layer) on the optical contrast and reflection index of the recording medium. The values are detected for the DVD wavelength of 670nm. The optical contrast of 0.99 (or 99 percent) is not affected for layer thicknesses in the range of 0 to 150 nm. The reflection index of 0.256 is also unaffected.

Fig. 6 shows the optical contrast and reflection level of the recording medium according to die preferred embodiment for laser beams with a wavelength of 405nm. The optical contrast at this wavelength has a peak if the thickness of the correction layer is chosen to be 66nm. The reflection level has a maximum at a layer thickness of approximately 95 nm. The recorded value of the optical contrast is equal to 0.692 (or 69.2 percent). This is a considerable improvement in comparison with the optical contrast of 22.3 percent detected for the recording medium without the correction layer. The reflection index is equal to 0.06 (or 6 percent) for a correction layer thickness of 66nm. This falls within the reflection range specified by the BD disc standard.

## Claims

1. Optical storage medium comprising a storage layer (4) and a first layer (5); said first layer providing optical properties for data retrieval from the storage layer using a laser with a first wavelength W₁, **characterized by** a second layer arranged between said first layer and a substrate (6) and providing predetermined optical properties for data retrieval from the storage layer using a laser with a second wavelength W₂, wherein the optical properties of said first and second layers refer to reading laser beams of said first and second wavelengths entering said optical storage medium through said substrate, and wherein the refraction index n_{L1}(W1) of the first layer for the first wavelength and the refraction index n_{L2}(W₁) of the second layer for the first wavelength are chosen in such a way, that the relative difference between the refraction indexes [n_{L1}(W1) - n_{L2}(W1)]/ n_{L1}(W1) does not exceed 0.1.

2. Optical storage medium according to claim 1, wherein the second layer is made of 2-Ethylhexyl-2-cyano-4-(3-methyl-2-oxazolinylidene)-crotonate (C₁₇H₂₆N₂O₃).

3. Optical storage medium according to claim 1, wherein the first wavelength is within the range of 650 to 670 nm and the second wavelength is within the range of 400 to 410 nm.

4. Optical storage medium according to claim 1 and claim 2, wherein the second layer has a thickness within the range of 60 to 70 nm.

## Patentansprüche

1. Optisches Speichermedium, das eine Speicherschicht (4) und eine erste Schicht (5) umfasst; wobei die erste Schicht optische Eigenschaften zum Abrufen von Daten aus der Speicherschicht unter Verwendung eines Lasers mit einer ersten Wellenlänge W₁ verschafft, **dadurch gekennzeichnet, dass** eine zweite Schicht zwischen der ersten Schicht und einem Substrat (6) angeordnet ist und vorgegebene optische Eigenschaften zum Abrufen von Daten aus der Speicherschicht unter Verwendung eines Lasers mit einer zweiten Wellenlänge W₂ verschafft, wobei die optischen Eigenschaften der ersten und der zweiten Schicht sich auf Lese-Laserstrahlen der ersten und der zweiten Wellenlänge beziehen, die durch das Substrat hindurch in das optische Speichermedium eindringen, und wobei der Brechungsindex N_{L1}(W₁) der ersten Schicht für die erste Wellenlänge und der Brechungsindex N_{L2}(W₁) der zweiten Schicht für die erste Wellenlänge auf eine solche Weise gewählt sind, dass die relative Differenz zwischen den Brechungsindizes [N_{L1}(W₁) - N_{L2}(W₁)] / N_{L1}(W₁) nicht größer als 0,1 ist.

2. Optisches Speichermedium nach Anspruch 1, wobei die zweite Schicht aus 2-Ethylhexyl-2-cyano-4-(3-methyl-2-oxazolinyliden)-crotonat (C₁₇H₂₆N₂O₃) hergestellt ist.

3. Optisches Speichermedium nach Anspruch 1, wobei die innerhalb des Bereiches von 650 bis 670 nm liegt und die zweite Wellenlänge innerhalb des Bereiches von 400 bis 410 nm liegt.

4. Optisches Speichermedium nach Anspruch 1 und Anspruch 2, wobei die zweite Schicht eine Dicke innerhalb des Bereiches von 60 bis 70 nm aufweist.

## Revendications

1. Support de stockage optique comprenant une couche de stockage (4) et une première couche (5); ladite première couche fournissant des propriétés optiques pour l'extraction de données à partir de la couche de stockage à l'aide d'un laser ayant une première longueur d'onde W₁, **caractérisé par** une seconde couche qui est disposée entre ladite première couche et un substrat (6) et qui fournit des propriétés optiques prédéterminées pour l'extraction de données à partir de la couche de stockage à l'aide d'un laser ayant une seconde longueur d'onde W₂ où les propriétés optiques desdites première et seconde couches se rapportent à la lecture des faisceaux laser desdites première et seconde longueurs d'onde entrant dans ledit support de stockage optique à travers ledit substrat et où l'indice de réfraction n_{L1} (W1) de la première couche pour la première longueur d'onde et l'indice de réfraction n_{L2} (W1) de la seconde couche pour la première longueur d'onde sont choisis de telle façon que la différence relative entre les indices de réfraction [n_{L1}(W₁) - n_{L2} (W₁)]/ n_{L1}(W₁) ne dépasse pas 0,1.

2. Support de stockage optique selon la revendication 1, dans lequel la seconde couche est fabriquée à partir de 2-éthylhexyle-2-cyano-4-(3-méthyle-2-oxazolinylidène)-crotonate (C₁₇H₂₆N₂O₃).

3. Support de stockage optique selon la revendication 1, dans lequel la première longueur d'onde se situe dans la gamme comprise entre 650 et 670 nm et la seconde longueur d'onde se situe dans la gamme comprise entre 400 et 410 nm.

4. Support de stockage optique selon les revendications 1 et 2, dans lequel la seconde couche présente une épaisseur dans la gamme comprise entre 60 et 70 nm.
